# EUROPÄISCHE PATENTSCHRIFT

(11) **EP 1 307 316 B1**
(45) Veröffentlichungstag und Bekanntmachung des Hinweises auf die Patenterteilung: **13.08.2008**
(21) Anmeldenummer: 01960269.7
(22) Anmeldetag: 05.06.2001
(51) Int. Cl.: B23P 19/06, B21J 15/02, F16B 37/06

(54) **FUNKTIONSTRÄGERANORDNUNG, WERKZEUG ZUR ANWENDUNG MIT DER FUNKTIONSTRÄGERANORDNUNG SOWIE VERFAHREN ZUM EINSETZEN DER FUNKTIONSTRÄGERANORDNUNG IN EIN BAUTEIL**
FUNCTIONAL CARRIER DEVICE, TOOL FOR USE WITH THE FUNCTIONAL CARRIER DEVICE AND METHOD FOR INSERTING THE FUNCTIONAL CARRIER DEVICE INTO A COMPONENT
DISPOSITIF D'ELEMENT FONCTIONNEL, OUTIL DESTINE A ETRE EMPLOYE AVEC LE DISPOSITIF D'ELEMENT FONCTIONNEL ET PROCEDE DESTINE A INSERER LE DISPOSITIF D'ELEMENT FONCTIONNEL DANS UN COMPOSANT

(30) Priorität: 07.08.2000 DE 10038393
(43) Veröffentlichungstag der Anmeldung: 07.05.2003
(73) Patentinhaber: Profil Verbindungstechnik GmbH & Co. KG, 61381 Friedrichsdorf (DE)
(72) Erfinder: BABEJ, Jiri, 35423 Lich (DE); HUMPERT, Richard, 61191 Rosbach v.d.H. (DE); VIETH, Michael, 61118 Bad Vilbel (DE)
(74) Vertreter: Manitz, Finsterwald & Partner GbR
(86) Internationale Anmeldenummer: PCT/EP2001/006383
(87) Internationale Veröffentlichungsnummer: WO 2002/011944

(56) Entgegenhaltungen:
- EP-A- 0 842 733
- WO-A-00/47363
- US-A- 4 212 224
- US-A- 4 555 838

## Beschreibung

Die vorliegende Erfindung betrifft eine Funktionsträgeranordnung bestehend aus einem Funktionselement mit Schaft- und Kopfteil sowie einer Niethülse, wobei die Niethülse in axialer Richtung des Schaftteils an diesem entlangbewegbar ist und das Funktionselement im Übergangsbereich zwischen dem Schaftteil und dem Kopfteil eine eine Gleitfläche zur Verformung des einen Endes der Niethülse bildende Hohlkehle aufweist, wobei die Hohlkehle wahlweise mit sich in Längsrichtung erstreckenden Nuten und/ oder Vorsprüngen versehen sein kann.

Weiterhin betrifft die vorliegende Erfindung ein Werkzeug zum Einsetzen einer Funktionsträgeranordnung dieser Art in ein Bauteil sowie Verfahren zum Einsetzen der Funktionsträgeranordnung in Bauteile.

Eine Funktionsträgeranordnung der eingangs genannten Art ist in der nicht vorveröffentlichten deutschen Patentanmeldung 199 05 041.4 bzw. in der entsprechenden, ebenfalls nicht vorveröffentlichten PCT-Anmeldung PCT/EP00/00271 beschrieben. Dieser Schrift bildet den einschlägigen Stand der Technik nach Art 54(3) EPÜ.

In den genannten Patentanmeldungen sind auch Werkzeuge beschrieben, die zum Einsetzen der Funktionsträgeranordnung in ein Bauteil ausgelegt sind, wobei es bei dem Bauteil sich beispielsweise um ein Kunststoffbauteil oder ein Blechteil handeln kann.

Bei den dort beschriebenen Werkzeugen wird entweder das Funktionselement durch das entsprechende Werkzeug gegen Rotation gesichert und die Niethülse selbst entlang des Gewindes des Funktionselements in Richtung auf das Kopfteil zu geschraubt, um die Verformung an der Gleitfläche herbeizuführen, oder es wird ein Hilfswerkzeug am Gewinde des Funktionselements entlang geschraubt, das dann die Niethülse entlang des Schaftteils schiebt und an der Gleitfläche in der gewünschten Weise verformt. Diese Werkzeuge sind insbesondere zur einseitigen Anwendung ausgelegt, d.h. das Funktionselement wird nur von einer Seite des vorgelochten Bauteils in diese eingebracht. Es sind keine Hilfswerkzeuge auf der entgegengesetzten Seite des Bauteils angeordnet. Dies ist insbesondere für Reparaturlösungen interessant, bei denen eine Funktionsträgeranordnung von einer Seite in ein Bauteil eingesetzt werden muß, da die andere Seite nicht zugänglich ist. Ein Beispiel hierfür wäre eine Reparatur an einem Kraftfahrzeug, bei dem die Funktionsträgeranordnung in einen hohlen Karosserieteil eingeführt werden muß, beispielsweise in einen Türpfosten, bei dem es nicht möglich ist, das Blechteil auf der inneren Seite des Türpfostens abzustützen.

Eine weitere Möglichkeit, die in den genannten Schriften beschrieben ist, besteht darin, ein Mutterelement an dem mit einem Außengewinde versehenen Schaftteil des Funktionselements aufzuschrauben und durch die Drehung des Mutterelementes eine entsprechende axiale Kraft auf die Niethülse auszuüben.

Es wird in den genannten Schriften zum Ausdruck gebracht, daß die Verformung der Niethülse auch mit einem Werkzeug durchführbar ist, das ausgelegt ist, eine ziehende Kraft auf das Schaftteil des Funktionselements vom Kopfteil weg und gleichzeitig eine drückende Kraft auf die Stirnfläche der Niethülse in Richtung auf das Kopfteil auszuüben, ähnlich wie bei einer herkömmlichen Nietzange.

Die beschriebenen Werkzeuge umfassen also Werkzeuge mit drehbaren Einrichtungen, die das Gewinde des Funktionselements zum Erzeugen der für die Verformung der Niethülse erforderlichen Kraft ausnutzen sowie nietzangenähnliche Lösungen. Bei der Ausnutzung des Gewindes des Funktionselements für die Verformung der Niethülse muß man die Niethülse so bemessen, daß sie mit Kräften verformt werden kann, die nicht zu einer Beschädigung des Gewindes führen. Diese Variante beschränkt somit in gewissem Maße die Festigkeit der Niethülse. Im übrigen benötigen die entsprechenden Drehbewegungen relativ viel Zeit, so daß das Einsetzverfahren unter Umständen relativ lange dauert. Dies ist zwar für eine Reparaturlösung ohne Belang, würde aber gegen eine serienmäßige Anwendung des Werkzeuges zum Einsetzen entsprechender Funktionsträgeranordnungen sprechen.

Bei einer Nietzange bestehen auch Beschränkungen bezüglich der Festigkeit und Verformbarkeit der Niethülse, da die entsprechenden Kräfte zu einer axialen Belastung des Funktionselements und dessen Gewinde führen.

Weiterhin weisen die Niethülsen nach den oben genannten Schriften eine besondere Formgebung auf, die zu entsprechenden Herstellungskosten führen. Auch müssen die Funktionselemente teilweise mit besonderen Formmerkmalen versehen werden, um die Zusammenarbeit mit den Werkzeugen beim Einsetzen der Funktionsträgeranordnung zu gewährleisten.

Diese besonderen Formmerkmale führen auch zu entsprechenden Kosten bei den Funktionselementen.

Aufgabe der vorliegenden Erfindung ist es, einerseits eine verbesserte Funktionsträgeranordnung zu schaffen, bei der die Herstellungskosten für die Niethülse und das Funktionselement im Vergleich zu den bisherigen Lösungen herabgesetzt werden können, und andererseits ein Werkzeug zur Anwendung mit den Funktionselementen vorzustellen, das es ermöglicht, die Funktionsträgeranordnung besonders wirtschaftlich einzusetzen, mit geringeren Beschränkungen in bezug auf die Festigkeit der Niethülse und geringerer Belastung des Funktionselements und ohne die Erfordernis besonderer Formmerkmale des Funktionselements oder der Niethülse.

Weiterhin ist es eine Aufgabe der vorliegenden Erfindung, Verfahren zu schaffen, bei denen die Funktionselemente mit den neuen Werkzeugen eingesetzt werden können.

Zur Lösung dieser Aufgabe in bezug auf die Funktionsträgeranordnung weist die Niethülse die Form eines zylindrischen Rohrabschnittes auf.

Da die Niethülse als ein einfacher Rohrabschnitt ausgebildet ist, kann sie sehr preisgünstig aus Rohrmaterial hergestellt werden, ohne daß eine besondere Formgebung des Rohrmaterials notwendig ist. Die Niethülsen können beispielsweise als Massenprodukt in einem Drehautomat durch Abschneiden von Rohrlängen hergestellt werden.

Die Niethülse kann einfach die Form eines kreiszylindrischen Rohrabschnittes aufweisen, könnte aber auch im Querschnitt einen Außenumriß entsprechend einem Polygon oder einer genuteten Form aufweisen.

In den beiden zuletzt genannten Fällen kommt eine Verdrehsicherung zwischen der Niethülse und dem Bauteil durch die äußere Formgebung der Niethülse zustande, da die Ecken des Polygonals und die Nuten der genuteten Form eine entsprechende Verriegelung mit dem Blechteil hervorrufen.

Zum Einsetzen der Funktionsträgeranordnung in ein Bauteil, insbesondere in ein plattenförmiges Bauteil, beispielsweise in ein Blechteil, wird ein Werkzeug nach Anspruch 5 vorgesehen, wobei die Funktionsträgeranordnung aus einem Funktionselement mit Schaft- und Kopfteil sowie einer Niethülse besteht, die Niethülse in axialer Richtung des Schaftteils an diesem entlang bewegbar ist und das Funktionselement im Übergangsbereich zwischen dem Schaftteil und dem Kopfteil eine eine Gleitfläche zur Verformung des einen Endes der Niethülse bildende Hohlkehle aufweist, und die Hohlkehle wahlweise mit sich in Längsrichtung erstreckenden Nuten und/oder Vorsprüngen versehen sein kann, insbesondere nach einem der vorhergehenden Ansprüche, wobei das Werkzeug einen Stößel aufweist, das an einem dem Kopfteil abgewandten Stirnende des Funktionselements im Betrieb anliegt bzw. angreift. Das Werkzeug weist eine am Stößel beweglich geführte Masse auf, , die an seinem einen Stirnende zur treibenden Anlage mit einer dem Kopfteil des Funktionselements abgewandten Stirnende der Niethülse ausgelegt ist und an seinem entgegengesetzten Stirnende vom Stößel, beispielsweise von einer Ringschulter des Stößels, antreibbar ist.

Sinn dieser Konstruktion ist, daß der Masse eine genau vorgebbare kinetische Energie erteilt werden kann, die dann ausreicht, um die Niethülse vollständig zu verformen. Es sind verschiedene Varianten des Werkzeuges vorgesehen. Beispielsweise kann nach Anspruch 6 das Werkzeug in Kombination mit einer Matrize verwendet werden, wobei die Matrize ausgelegt ist, um das Bauteil auf einer Seite abzustützen und das Werkzeug auf der anderen Seite des Bauteils anzuordnen ist, dadurch gekennzeichnet, daß die Matrize einer kreisförmigen Vertiefung aufweist mit einem Außendurchmesser größer als der Außendurchmesser des Kopfteils des Funktionselements.

Eine solche Ausführungsform eignet sich einerseits zur Anwendung in einer Presse, wobei die kinetische Energie der Masse aus der Schließgeschwindigkeit der Presse entsteht. Die Kraft der Presse wird außerdem dazu genutzt, das Bauteil bzw. das Blechteil mit dem Kopfteil des Funktionselements durchzustanzen. Das heißt, das Element wird auch hier als Teil des Werkzeugs benutzt. Besonders günstig ist, daß das Funktionselement zwar in Kompression belastet wird, aber keine Zugspannung oder Kräfte entstehen, die das Gewinde des Funktionselements besonders beschädigen könnten.

Eine weitere Alternative besteht darin, das Werkzeug entsprechend Anspruch 11 zangenartig auszubilden und den Stößel dann mit einem Schlagwerk oder einem Bolzenschußgerät anzutreiben.

Bei einem Bolzenschußgerät wird der Stößel von einer kleinen Sprengladung angetrieben nach Art eines Nagelschußgerätes, das man auf Baustellen verwendet.

Eine andere Möglichkeit ist, das Werkzeug so anzuwenden, daß die Funktionsträgeranordnung nur von einer Seite des Bauteils aus eingesetzt wird. Eine entsprechende Werkzeuganordnung ist Anspruch 13 zu entnehmen. Hier wird der Stößel vorzugsweise ebenfalls mit einem Bolzenschußgerät angetrieben. Die kinetische Energie, die auf den Stößel übertragen wird, reicht aus, um das Kopfteil des Funktionselements durch das Bauteil hindurch zu treiben und einen entsprechenden Stanzbutzen zu erzeugen. Sobald der Stößel an die Anschlagfläche des Anschlagteils anstößt, ist eine weitere axiale Bewegung des Stößels gegenüber dem Anschlagteil und dem Bauteil nicht mehr möglich. Das Kopfteil des Funktionselements befindet sich in der richtigen Position auf der anderen Seite des Bauteils. Die Masse fliegt aber in diesem Zustand weiter und ist vom Gewicht her so bemessen, daß sie die Niethülse vollständig in einem Schlag umformen kann.

Die Positionierung des Funktionselements gegenüber dem Stößel kann bei diesem Beispiel so sichergestellt werden, daß das Schaftteil des Funktionselements in einer entsprechenden Gewindebohrung des Stößels eingeschraubt wird, so daß die Niethülse als Abstandshalter dient und zwar dadurch, daß sie an ihrem einen Stirnende am Kopfteil des Funktionselements und am anderen Stirnende an der Masse anliegt, wobei das Funktionselement so weit in den Stößel hineingeschraubt wird, daß die Masse an der Ringschulter des Stößels anliegt.

Besondere Verfahren zum Einsetzen von Funktionsträgeranordnungen mit einem Funktionselement und einer Niethülse sind den Ansprüchen 21 bis 26 zu entnehmen.

Besondere Kombinationen einer erfindungsgemäßen Funktionsträgeranordnung mit einem Bauteil sind in den Ansprüchen 27 bis 30 beansprucht.

Die Niethülse nach der vorliegenden Erfindung wird nämlich so verformt, daß das eine Stirnende durch die Hohlkehle des Funktionselements radial aufgeweitet und radial nach außen umgelenkt wird, während das andere Stirnende der Niethülse, das auf der anderen Seite des Bauteils oder eines oberen Bereiches des Bauteils liegt, so gequetscht wird, daß ein Ringflansch entsteht, der beispielsweise eine ringfalzähnliche Form aufweisen kann, wobei das Bauteil dann formschlüssig zwischen dem Ringflansch bzw. der Ringfalz und dem radial aufgeweiteten Ende der Niethülse klemmend gehalten wird.

Die Klemmung ist so intensiv, daß erhebliche Verdrehsicherungskräfte entstehen. Sollte diese Verdrehsicherungskräfte aus dem einen oder anderen Grund nicht ausreichen, so kann die Niethülse mit einer Klebeverbindung, beispielsweise einem Trockenkleber, der unter Druck fließt, versehen werden, so daß eine verklebte Verbindung zwischen der Niethülse und dem Bauteil einerseits und zwischen der Niethülse und dem Funktionselement andererseits entsteht: Im normalen Fall, beim Vorsehen der bevorzugten, sich radial erstreckenden Vertiefungen und/oder Vorsprüngen an der Gleitfläche im Übergangsbereich zwischen dem Schaftteil und dem Kopfteil des Funktionselements wird aber hier ein intensiver Formschluß zwischen der Niethülse und dem Funktionselement erreicht, der zwischen diesen beiden Teilen eine hohe Verdrehsicherheit gewährleistet. Die Verformung der Niethülse durch diese sich in radialer Richtung erstreckenden Vertiefungen und/oder Vorsprüngen führt aber auch zu einer Verformung des Bauteils im Bereich dieser Formmerkmale, so daß zwischen der Niethülse und dem Bauteil eine entsprechend formschlüssige Verbindung resultiert und das Funktionselement deshalb auch gegenüber dem Bauteil verdrehsicher angeordnet ist.

Die Erfindung wird nachfolgend näher erläutert anhand von Ausführungsbeispielen unter Bezugnahme auf die Zeichnungen, die zeigen:
- Fig. 1: einen axialen Querschnitt durch eine erfindungsgemäße Niethülse,
- Fig. 2: eine schematische Seitenansicht eines Funktionselements zur Anwendung mit der Niethülse der Fig. 1,
- Fig. 3: eine Stirnansicht des erfindungsgemäßen Funktionselements der Fig. 2 entsprechend dem Pfeil III in Fig. 2,
- Fig. 4: eine Seitenansicht entsprechend der Fig. 2, jedoch mit der erfindungsgemäßen Niethülse auf dem erfindungsgemäßen Funktionselement,
- Fig. 5: eine Stirnansicht der erfindungsgemäßen Funktionsträgeranordnung gemäß Fig. 4 in Pfeilrichtung V der Fig. 4 gesehen,
- Fig. 6: eine teilweise in Längsrichtung geschnittene Ansicht eines ersten erfindungsgemäßen Werkzeugs zum Einsetzen einer erfindungsgemäßen Funktionsträgeranordnung in ein Bauteil unter Anwendung einer Matrize und im Ausgangszustand gezeigt,
- Fig. 7: das Werkzeug der Fig. 6 nach dem Durchstanzen des Bauteils, jedoch vor der Verformung der Niethülse,
- Fig. 8: eine Darstellung ähnlich der Fig. 7, jedoch in einem späteren Verfahren des Einsetzverfahrens, in dem die Verformung der, Niethülse bereits angefangen hat,
- Fig. 9: eine Darstellung ähnlich der Fig. 8, jedoch am Ende des Einsetzverfahrens nach Herstellung der erfindungsgemäßen Verbindung zwischen der Funktionsträgeranordnung und dem Bauteil,
- Fig. 10: eine weitere Zeichnung ähnlich der Fig. 9, jedoch bei der Herausnahme des fertigen Zusammenbauteils aus der Matrize bei gleichzeitiger Entfernung des Stanzbutzens,
- Fig. 11: eine erfindungsgemäße Anordnung für das Antreiben des Stößels in einem Werkzeug gemäß den Fig. 6 bis 10,
- Fig. 12: eine teilweise in Längsrichtung geschnittene Ansicht einer weiteren Variante eines erfindungsgemäßen Werkzeuges unmittelbar vor dem Beginn des Einsetzverfahrens,
- Fig. 13: das Werkzeug der Fig. 12 in einem Anfangsstadium des Einsetzverfahrens unmittelbar nach der Erzeugung eines Stanzbutzens, jedoch vor Verformung der erfindungsgemäßen Niethülse,
- Fig. 14: eine Zeichnung ähnlich der Fig. 13, jedoch in der Endposition des Funktionselements und in einem Stadium, bei der die Verformung der Niethülse bereits angefangen hat, und
- Fig. 15: eine Darstellung ähnlich der Fig. 14, jedoch unmittelbar am Ende des Einsetzverfahrens, wobei das Funktionselement formschlüssig mit dem Bauteil über die erfindungsgemäße Niethülse verbunden ist.

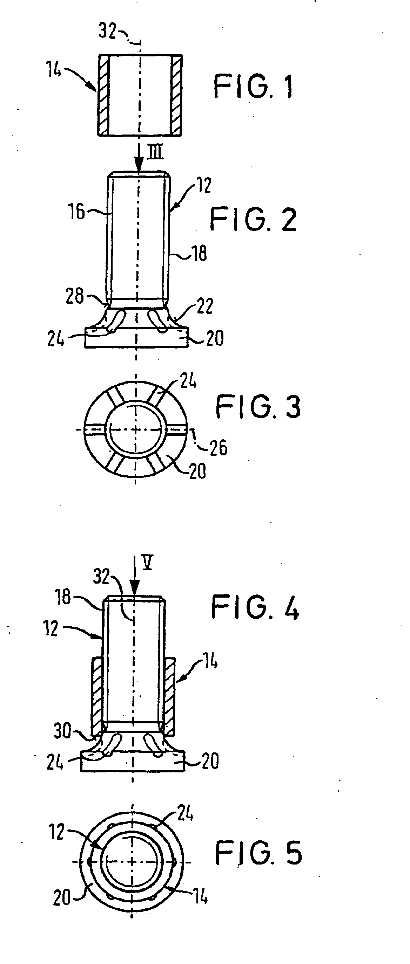

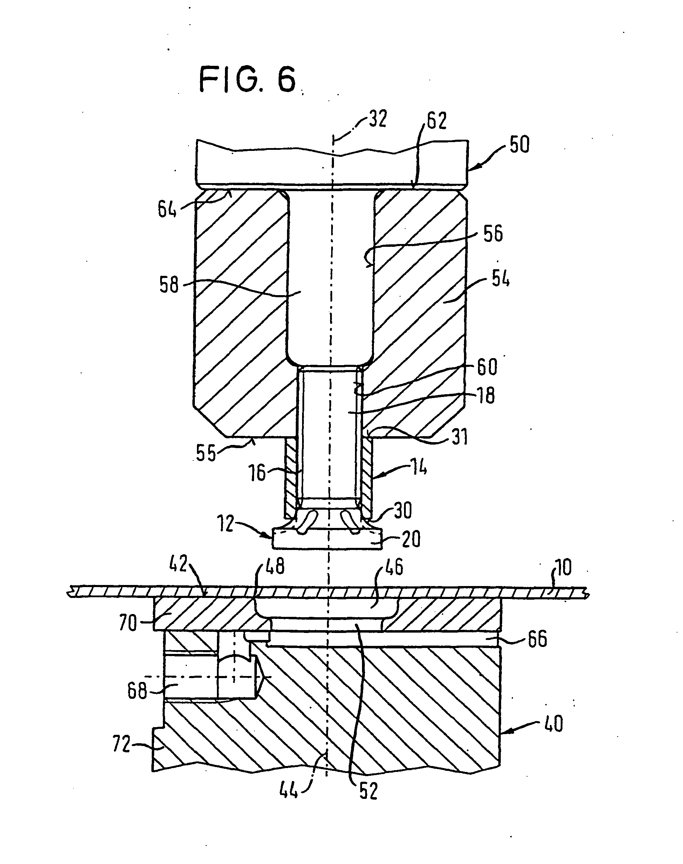

Fig. 1 bis 5 zeigen eine bevorzugte, erfindungsgemäße Ausführungsform eines Funktionsträgers, der in ein beliebiges Bauteil (beispielsweise das Blechteil 10 in Fig. 6) einsetzbar ist, und der aus einem Funktionselement 12 und einer Niethülse 14 besteht. Das Bauteil könnte beispielsweise auch ein Kunststoffbauteil sein, auch ein Wandteil eines Gehäuses oder dergleichen. Es könnte aber auch ein Sandwichbauteil sein, beispielsweise bestehend aus zwei Blechlagen oder Blechhäuten mit einem dazwischen angeordneten Kern aus Schaumstoff.

Das Bolzenelement 12 hat ein mit einem Gewinde 16 versehendes Schaftteil 18 und weist im Übergangsbereich zwischen dem Schaftteil 18 und dem Kopfteil 20 eine eine Gleitfläche zur Verformung der Niethülse bildende Hohlkehle 22 auf.

Wie aus den Fig. 2, 3, 4 und 5 ersichtlich ist, sind in dieser Gleitfläche gerundete Nuten 24 eingearbeitet, die jeweils in einer Längsebene des Bolzenelementes 12, beispielsweise in der Ebene 26, angeordnet sind. Diese gerundeten Vertiefungen sind nicht zwingend notwendig und könnten auch weggelassen werden oder durch wulstartige Erhebungen bzw. Vorsprünge der gleichen Ausrichtung ersetzt werden. Es könnten auch Kombinationen von wulstartigen Erhebungen und nutartigen Vertiefungen zur Anwendung gelangen. Diese nutartigen Vertiefungen bzw. die entsprechenden wulstartigen Erhebungen sorgen dafür, eine relative Verdrehung des Bolzenelementes und der Niethülse zu verhindern; die je nach Auslegung des Elementes wünschenswert ist, wie nachfolgend erläutert wird.

Zwischen dem Gewindezylinder 16 und der die Gleitfläche bildenden Hohlkehle 22 befindet sich eine ringförmige Nut 28 am Auslauf des Gewindes.

Die Hülse 14 ist hier als kreiszylindrischer Rohrabschnitt ausgebildet und weist einen Innendurchmesser auf, der nur geringfügig größer ist als der Außendurchmesser des Schaftteils 18 des Funktionselements 12. Somit kann die rohrförmige Niethülse, wie in Fig. 4 gezeigt, über das Schaftteil 18 des Funktionselements geschoben werden, bis sein in Fig. 4 unteres Stirnende 30 am Anfang der Hohlkehle zum Anliegen kommt. Die Niethülse ist somit koaxial zur mittleren Längsachse 32 des Funktionselements angeordnet.

Das Einsetzen der Funktionsträgeranordnung bestehend aus dem Funktionselement 12 und der Niethülse 14, wie in den Fig. 4 und 5 gezeigt, wird nunmehr im Zusammenhang mit den Fig. 6 bis 11 beschrieben. Fig. 6 zeigt ein Bauteil, hier ein Blechteil 10, in einer Ausgangsposition auf der in Fig. 6 oberen Stirnseite einer Matrize 40 angeordnet. Die Matrize 40 weist eine ringförmige Auflagefläche 42 auf, die unmittelbar in Berührung mit dem Blechteil 10 steht. Konzentrisch zur Längsachse 44 der Matrize. 40 ist in der oberen Stirnseite der Matrize eine kreisförmige Vertiefung 46 eingearbeitet, die über eine gerundete Ziehkante 48 in die Stirnfläche 42 übergeht. Die kreisförmige Vertiefung 46 weist einen maximalen Innendurchmesser auf, der größer ist als der Außendurchmesser des Kopfteils 20 der Funktionsträgeranordnung, die oberhalb des Bauteils 10 an einem Stößel 50 haftet, beispielsweise aufgrund von magnetischen Kräften, die beispielsweise von einem im Stößel eingelassenen Permanentmagneten erzeugt oder durch Magnetisierung des Stößels hervorgerufen werden.

Die kreisförmige Vertiefung 46 ist als gestufte Bohrung ausgebildet und weist einen unteren, im Durchmesser kleineren Bereich 52 auf, der immer noch geringfügig größer ist als der Durchmesser des Kopfteils 20 des Funktionselements 12.

Zwischen dem Stößel 50 und der sich auf dem Funktionselement 12 befindlichen Niethülse 14 befindet sich eine Masse 54, die einen Schlagkörper bildet. Der Schlagkörper hat im oberen Bereich eine Bohrung 56 mit einem Innendurchmesser, der geringfügig größer ist als der Außendurchmesser eines Stößelvorsprunges 58, so daß die Masse 54 relativ zum Stößelvorsprung 58 verschiebbar ist. Im unteren Bereich der Masse 54 befindet sich eine Bohrung 60 mit einem etwas kleineren Durchmesser, der nur geringfügig größer bemessen ist als der Außendurchmesser des Schaftteils 18 des Funktionselements 12. Das heißt der Durchmesser der Bohrung 60 ist geringfügig größer als der Außendurchmesser des Gewindezylinders 16.

Aufgrund der Anziehungskräfte zwischen dem Stößel 40 und dem Funktionselement 12 befindet sich die Niethülse 14 an ihrem unteren Stirnende 30 in Anlage mit der Gleitfläche des Funktionselements und an ihrem entgegengesetzten Stirnende 31 in Anlage mit der unteren Stirnseite 55 der Masse 54. An ihrer oberen Stirnseite 62 befindet sich die Masse in Anlage an eine Ringfläche bzw. an eine Ringschulter 64 des Stößels. Man merkt, daß der Stößel 50 mit der Masse 54 in axialer Richtung mit der mittleren Längsachse 32 des Funktionselements ausgerichtet ist und daß auch die kreisförmige Vertiefung 46 der Matrize 40 konzentrisch zu dieser Längsachse 32 angeordnet ist. Das heißt, die Längsachse 32 fluchtet mit der Längsachse 44.

Unterhalb der kreisförmigen Vertiefung 46 geht der Butzenkanal 52 in einen seitlichen Ausgangskanal 66 der Matrize 40 über. Dieser seitliche Ausgangskanal kommuniziert mit einem Druckluftanschluß 68, der in Fig. 6 auf der linken Seite der Matrize 40 zu sehen ist. Die Anordnung der Matrize 40 kann beispielsweise so getroffen werden; daß die Matrize in ein scheibenförmiges Oberteil 70 und ein Unterteil 72 unterteilt ist, wobei das Oberteil 70 mittels nicht dargestellter Schrauben mit dem Unterteil 72 verschraubt sein kann. Hierdurch läßt sich der Ausgangskanal 66 leicht herstellen und das Verschleißteil der Matrize, nämlich die obere Platte 70, kann leicht ausgetauscht werden.

Man kann sich die Anordnung gemäß Fig. 6 zweifach vorstellen: einerseits könnten die Matrize 40 und der Stößel 50 zu gegeneinander beweglichen Werkzeugen einer Presse gehören, die zur Bearbeitung des Blechteils 10 eingesetzt wird.

Andererseits könnte, wie später näher erläutert wird, der Stößel 50 zu einem Schlagwerk, insbesondere in Form eines Bolzenschußgerätes, gehören, während die Matrize 40 an einem Gestellteil befestigt ist.

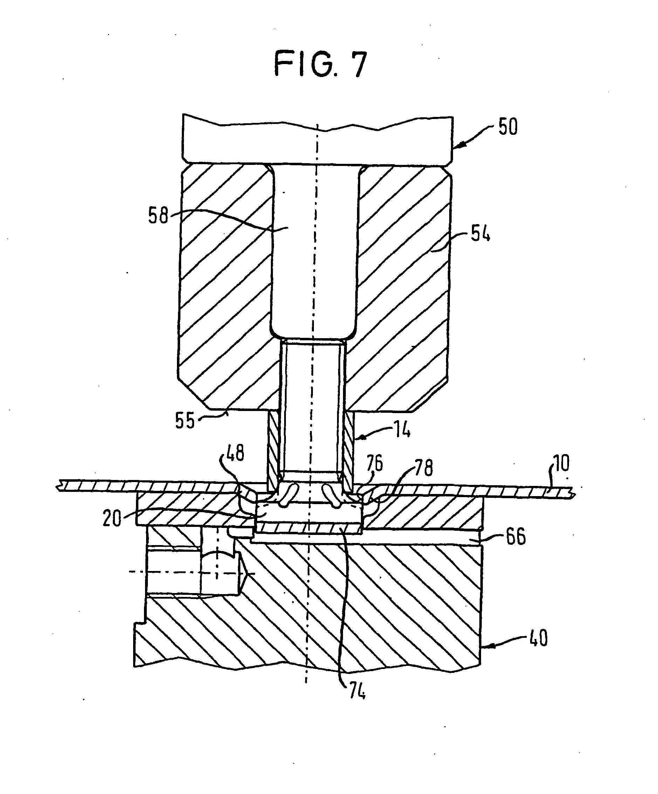

In beiden Fällen, d.h. im Falle der Realisierung als Werkzeuge einer Presse oder unter Anwendung eines Schlagwerks, wird der Stößel 50 mit hoher Geschwindigkeit, d.h. schlagartig, nach unten bewegt, so daß das Kopfteil 20 des Funktionselements das Blechteil 10 durchstanzt, wie in Fig. 7 dargestellt. Aufgrund des Unterschiedes im Durchmesser zwischen dem Kopfteil 20 des Funktionselements 12 und der kreisförmigen Vertiefung 46 wird beim Heraustrennen des Stanzbutzens 74 der Bereich des Bauteils 10 um das Stanzloch 76 herum zu einem konusförmigen Ringkragen 78 umgeformt, wobei die gerundete Ziehkante 48 zur Ausbildung des Ringkragens beiträgt und ein Durchtrennen des Blechmaterials im Bereich dieser Ziehkante verhindert.

Fig. 7 zeigt die Position des Stößels 50 mit der Masse 54 und der Funktionsträgeranordnung bestehend aus dem Funktionselement 12 und Niethülse 14 in dem Moment, als das Kopfteil 20 im Begriff ist, an die Unterseite des ringförmigen Kragens 78 vorbeizulaufen.

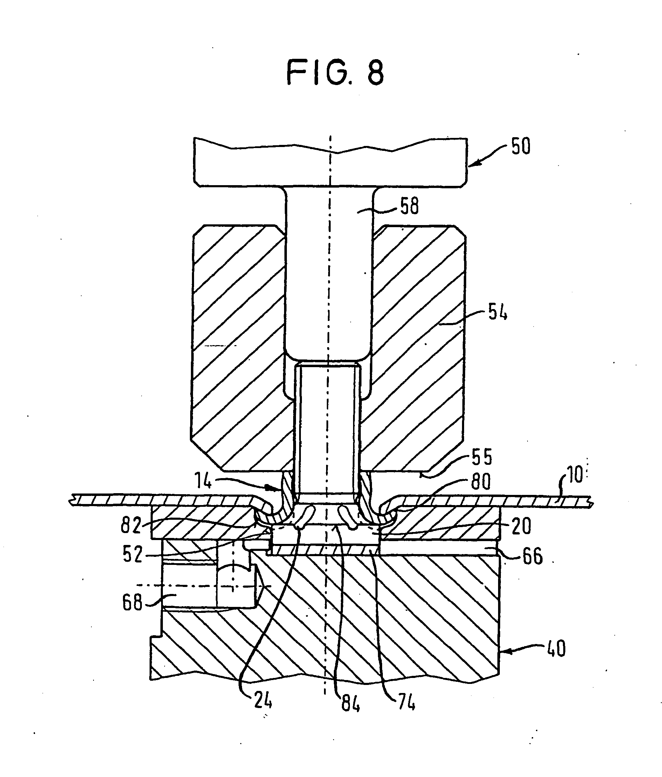

Der Stößel 50 bewegt sich nunmehr geringfügig weiter nach unten und gelangt hierdurch in die Position gemäß Fig. 8. In dieser Figur ist der Stanzbutzen 78 nunmehr zwischen der unteren Stirnseite des Kopfteils 20 des Funktionselements und der unteren Seite des Ausgangskanals 66 eingeklemmt und stützt somit das Funktionselement 12 von unten ab. Gleichzeitig wird der Stanzbutzen 78 flachgepreßt, was vorteilhaft ist. Die Gründe hierfür werden später näher erläutert.

Nach dem Anhalten des Funktionselements durch die Matrize 40 gemäß Fig. 8 kann sich der Stößel 50 nicht weiter in Richtung auf die Matrize 40 zubewegen und wird sozusagen von der Matrize 40 abgebremst. Die Masse 54, die aufgrund der Beschleunigung des Stößels durch das Schließen der Presse oder durch die Wirkung des Schlagwerkes mit dem Stößel auf eine erhebliche Geschwindigkeit beschleunigt wird, bewegt sich jedoch gegenüber dem Stößel 50 weiter und wird vom Stößelvorsprung 58 bei dieser relativen Bewegung geführt. Die untere Stirnseite 55 der Masse 54 drückt dabei auf die Niethülse 14 und führt dazu, daß das untere Ende der Niethülse 14 an der Gleitfläche der Hohlkehle 22 entlang gleitet, dabei radial ausgeweitet wird und sich unterhalb des ringförmigen Kragens 78 in den verbleibenden Hohlraum der kreisförmigen Vertiefung 46 hineinschiebt. Dabei kann der Übergang zwischen der senkrechten Begrenzungswand der kreisförmigen Vertiefung 46 und dem Butzenkanal 52 als gerundete Umlenkfläche 82 ausgebildet werden, um die Verformung der Niethülse zu unterstützen. Es soll jedoch sichergestellt werden, daß diese Umlenkfläche 82 geringfügig unterhalb der unteren Begrenzung 84 der Hohlkehle 22 liegt, vorzugsweise in etwa der Höhe der tiefsten Stelle der gerundeten Vertiefungen 24, so daß die Niethülse bei der radial nach außen gerichteten Bewegung nicht gehindert wird. Dies kann durch entsprechende Bemessung der Matrize unter Berücksichtigung der Dicke des Bauteils 10 und der axialen Länge des Kopfteils 20 unterhalb der Hohlkehle sichergestellt werden.

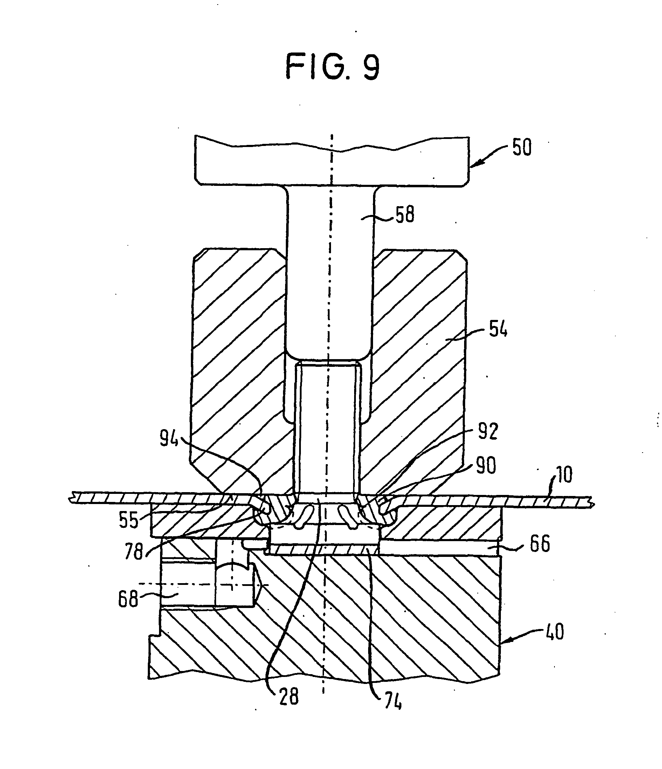

Bei der Weiterbewegung der Masse 54 füllt dann das umgeformte untere Ende der Niethülse den Hohlraum in der Matrize zumindest im wesentlichen vollständig aus, wie aus Fig. 9 ersichtlich ist. Die Niethülse kann somit im unteren Bereich nicht weiter verformt werden. Statt dessen reicht die kinetische Energie der Masse 54 aus, um das obere Ende der Niethülse zu einem Ringflansch 90 zu verformen, der im Prinzip als Ringfalz ausgebildet ist, wobei die doppelte Materiallage an der Stelle 92 deutlich zu erkennen ist.

Das Material aus dem oberen Ende der Niethülse füllt nun den Ringraum 94 oberhalb des ringförmigen Kragens 78 beinahe vollständig aus und wird auch in die ringförmige Nut 28 zwischen dem Gewindezylinder 16 und der Hohlkehle 22 eingedrückt. Die untere Stirnseite 55 der Masse 54 sorgt auch dafür, daß die Oberfläche des so gebildeten Ringflansches 90 in etwa in der gleichen Ebene wie die obere Seite des Bauteils 10 zu liegen kommt, was für die spätere Anbringung eines weiteren Bauteils am Funktionselement 12 wichtig ist, damit diese bündig mit der Oberfläche des Bauteils 10 liegt und beispielsweise nicht mittels abgestufter Bohrungen extra bearbeitet werden muß, um einen guten Sitz auf dem Bauteil 10 zu gewährleisten. Dies wäre im Prinzip aber möglich, wenn die Oberseite der verformten Niethülse oberhalb des Bauteils 10 angeordnet wäre.

Es wäre auch möglich, die Bohrung 60 der Masse 54 an der unteren Stirnseite mit einer konusförmigen Vertiefung zu versehen und das obere Stirnende 31 der Niethülse 14 hierdurch radial in das untere Ende des Gewindes in dieses hinein zu verformen, so daß ein Formschluß zwischen dem oberen Ende der Niethülse und dem Gewindezylinder 16 vorliegt, der der Verdrehsicherung dient.

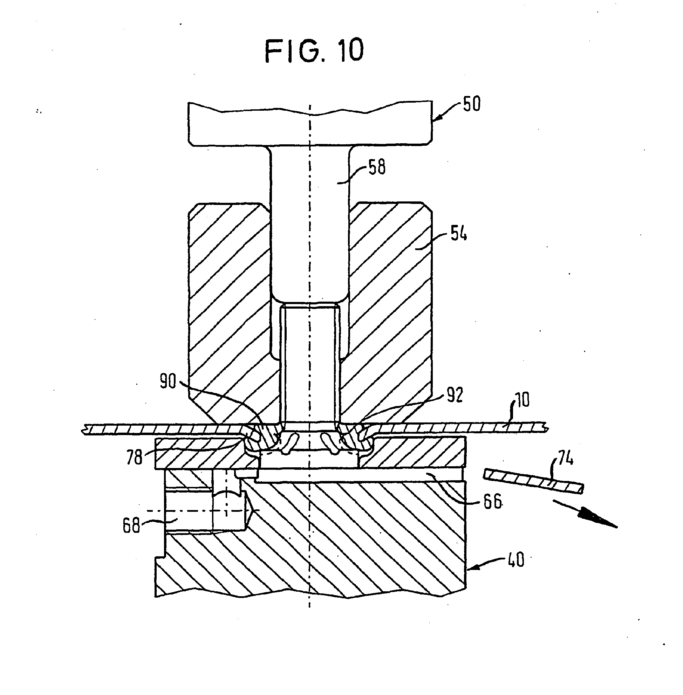

Im Stadium der Fig. 9 ist die Funktionsträgeranordnung bestehend aus dem Funktionselement und der nunmehr umgeformten Niethülse 14 vollständig mit dem Bauteil 10 verbunden. Der Stößel mit der Masse 54 kann nunmehr vom Bauteil 10 abgehoben werden, wie in Fig. 10 gezeigt. Sobald die in Fig. 10 untere Seite des Kopfteils 20 vom Stanzbutzen 78 angehoben ist, kann mittels eines Luftstosses durch den Preßluftanschluß 68 der Stanzbutzen durch den Ausgangskanal 66 herausgeblasen werden, wie in Fig. 10 gezeigt. Das Flachpressen des Stanzbutzens beim Einsetzen der Funktionsträgeranordnung gibt die Gewähr dafür, daß ein leicht gekrümmter Stanzbutzen 78 nicht im Ausgangskanal 66 hängen bleibt.

Nach der vollständigen Entfernung des Stößels 50 mit der Masse 54 kann das Bauteil 10 mit der damit befestigten Funktionsträgeranordnung aus dem Bereich der Matrize 40 als fertiges Zusammenbauteil entfernt werden.

Es soll darauf hingewiesen werden, daß die von der Masse 54 erzeugte Verformung der Niethülse 14 dazu geführt hat, daß das Material der Niethülse 14 zumindest teilweise in die gerundeten Vertiefungen 24 eingedrückt ist, so daß eine Verdrehsicherung zwischen der Niethülse und dem Kopfteil des Funktionselements 12 an dieser Stelle erzeugt ist. Diese Verformung des Materials der Niethülse führt aber auch zu einer entsprechenden Verformung des Ringkragens des Bauteils, so daß auch hier eine entsprechende Verdrehsicherung erzeugt wird. Diese Verdrehsicherung kann - wie bereits oben zum Ausdruck gebracht - auch dadurch unterstützt werden, daß die Niethülse zumindest teilweise in das Gewinde des Funktionselements hineingedrückt wird. Außerdem ist es möglich, die Niethülse auf beiden Seiten mit einem Klebstoff zu versehen, beispielsweise mit einem Trockenklebstoff, der bei Druckausübung klebrig wird, so daß sich eine verklebte Anordnung ergibt, die auch zur Erhöhung oder zur Sicherstellung der Verdrehsicherheit verwendet werden kann. Man kann die verschiedenen genannten Möglichkeiten der Verdrehsicherung gemeinsam oder alleine verwenden, je nachdem, welche Anforderungen gestellt werden.

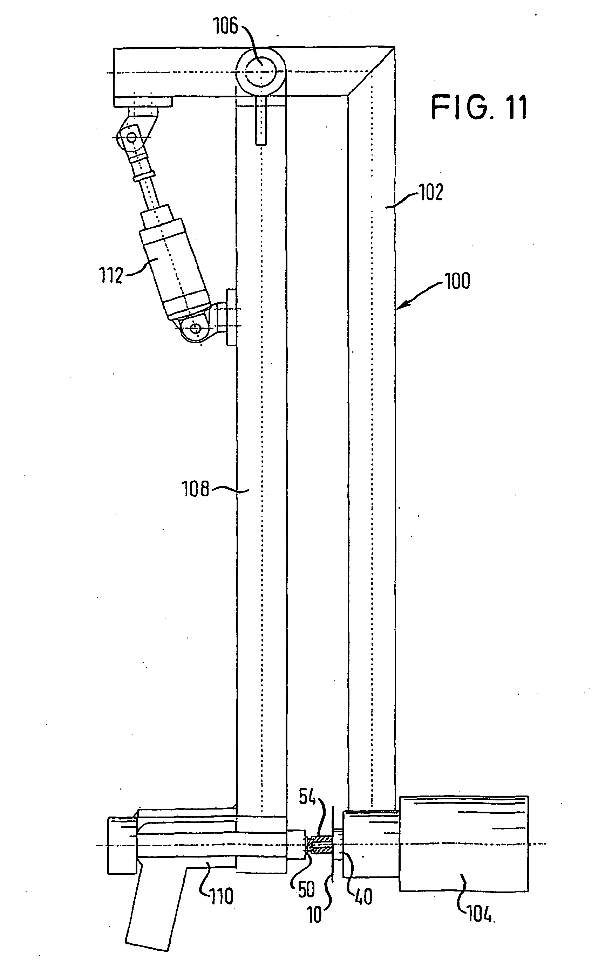

Es soll auch zum Ausdruck gebracht werden, daß die Bezeichnungen "oben", "unten", "senkrecht" etc., die im Zusammenhang mit den Fig. 6 bis 10 verwendet wurden, voraussetzen, daß der Stößel und die Matrize 40 so angeordnet sind, wie in diesen Figuren gezeigt. Eine solche Orientierung ist jedoch nicht zwangsläufig vorhanden, sondern der Stößel 50 und die Matrize 40 könnten eine beliebige Orientierung im Raum erhalten. Dies wird beispielsweise in Fig. 11 veranschaulicht.

Diese Fig. 11 zeigt nämlich ein Gestell 100 mit einem rechtwinkligen Arm 102, der die Matrize 40 und eine zusätzliche Sperrmasse 104 trägt, und mit einem schwenkbar bei 106 angelenkten Arm 108, der an seinem in Fig. 11 unteren Ende ein Schlagwerk 110 in Form eines Bölzenschußgeräts trägt. Durch diese Anordnung kann sichergestellt werden, daß in der Betriebsstellung mit dem Blechteil 10 zwischen der Matrize 40 und der am Stößel 50 verschiebbar gelagerten Masse 54 die Längsachse des Stößels 50 koaxial zur Längsachse der Matrize 40 angeordnet ist, d.h. daß sich alle Teile in der gewünschten Ausrichtung befinden.

Es kann sich bei dem Bolzenschußgerät 110 um ein Gerät ähnlich einem auf Baustellen häufig verwendeten Nagelschußgerät, beispielsweise der Firma Hilti, handeln, das mittels einer entsprechenden Sprengladung, die sich üblicherweise in einer Patrone befindet, für die gewünschte schlagartige Bewegung des Stößels sorgt. Bei der Berechnung der Sprengladung, die für das Einsetzen einer Funktionsträgeranordnung erforderlich ist, müssen verschiedene Überlegungen angestellt werden.

Es muß eine ausreichende Kraft auf den Stößel ausgeübt werden, um das Kopfteil 20 des Funktionselements durch das jeweilige Bauteil bzw.
Blechteil 10 hindurch zu stanzen und den Stanzbutzen flach zu pressen.

Darüber hinaus muß der Masse 54 eine ausreichende Geschwindigkeit erteilt werden, so daß die damit verbundene kinetische Energie ausreicht, um die Niethülse vollständig in einem Schlag umzuformen. Dabei soll die Sperrmasse 104 des Gestells 100 unter Berücksichtigung der Trägheit des Gestells so bemessen werden, daß die Energie der Sprengladung möglichst effizient ausgenutzt wird und keine ausgeprägte Bewegungen des Gestells 100 eintreten.

Das Bezugszeichen 112 deutet auf einen in beiden Richtungen wirkenden pneumatischen Zylinder hin, der einerseits dazu verwendet werden kann, das Schlagwerk bzw. das Bolzenschußgerät 1-10 mit Stößel 50 und Masse 54 von der Matrize zu entfernen und ggf. auch über den Stößel das Bauteil 10 mit angebrachter Funktionsträgeranordnung aus der Matrize heraus zu ziehen, falls diese in der Matrize klemmt.

Andererseits kann der Zylinder 112 dazu dienen, das Bolzenschußgerät 110 in Anlage mit dem Bauteil 10 zu bringen und eine dämpfende Wirkung auszuüben, um eine gedämpfte Schließbewegung des Gestells zu gewährleisten. Durch Erhöhung des Druckes im Zylinder 112 kann auch ein etwaiger Rückschlag des Bolzenschußgeräts gedämpft werden.

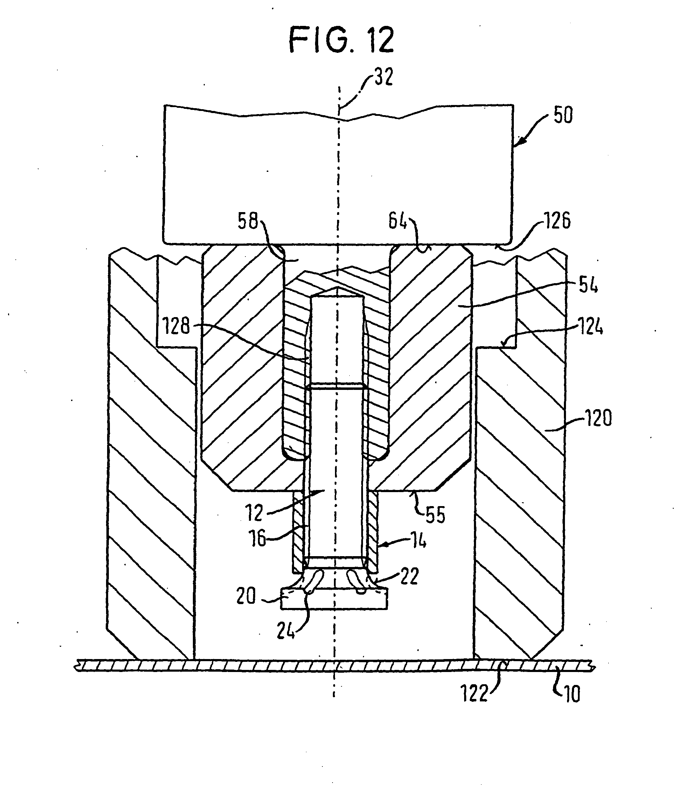

Das ganze Gestell 100 muß nicht in der Orientierung gemäß Fig. 11 positioniert werden, sondern könnte eine beliebige Orientierung im Raum aufweisen. Weiterhin könnte das Gestell 100 von einem Roboter getragen werden. Der Roboter könnte auch dafür sorgen, daß die Funktionsträgeranordnungen jeweils in Anlage am Stößel 50 bzw. Stößelvorsprung 58 gelangen. Es ist außerdem zulässig, das Funktionselement in eine entsprechende Gewindebohrung des Stößelvorsprungs 58 hineinzuschrauben, wie später näher erläutert wird anhand der Ausführungsform der Fig. 12 bis 15.

Die hierfür erforderliche Drehbewegung der Funktionsträgeranordnung bzw. des Stößels könnte von einem Roboter bewerkstelligt werden. Zur Freigabe des Zusammenbauteils müßte dann der Stößel 50 bzw. das Bauteil 10 mit der Funktionsträgeranordnung in entsprechender Weise gedreht werden, um das Funktionselement aus der Gewindebohrung des Stößels herauszuschrauben.

Eine besondere Ausführungsform der Erfindung wird nunmehr anhand der Fig. 12 bis 15 näher erläutert.

Aufgrund der Gemeinsamkeiten mit der bisher beschriebenen Anordnung werden für gleiche Teile gleiche Bezugszeichen verwendet. Gleiche Bezugszeichen weisen auf die gleiche Funktion und die gleichen Möglichkeiten hin wie bisher beschrieben, es sei denn, etwas Gegenteiliges wird zum Ausdruck gebracht.

Die einseitige Anbringung an ein Bauteil 10 kann aber nicht in einer Presse stattfinden, da vorausgesetzt wird, daß das Bauteil 10 nur von einer Seite aus zugänglich ist bzw. bei Anbringung von Kräften auf der entgegengesetzten Seite des Bauteils dieses beschädigt wird. Beispielsweise kann es sich bei dem Bauteil 10 um eine Seite eines Hohlraumes, beispielsweise in einer Schwelle oder im Türpfosten eines Autos handeln, bei der die andere Seite des Bauteils nicht zugänglich ist. Es ist aber nicht zwingend erforderlich, daß das Bauteil 10 zu einer solchen Hohlraumkonstruktion gehört. Es kann sich einfach um ein Montageverfahren handeln, wo man bestrebt ist, Funktionselemente nur von einer Seite auf ein Bauteil zu montieren.

Für die Funktion der erfindungsgemäßen Anordnung gemäß Fig. 12 bis 15 ist es erforderlich, daß der Stößel 50 von einem Schlagwerk angetrieben wird. Das Schlagwerk kann beispielsweise ein Bolzensetzgerät wie 110 der Fig. 11 sein, das aber in diesem Beispiel von einem Monteur oder Roboter getragen wird, d.h. losgelöst von einem Gestell 100. Um das einseitige Anbringen zu ermöglichen, ist es erforderlich, hier mit einem Anschlagteil 120 zu arbeiten, das vorzugsweise als Anschlaghülse realisiert ist. Diese Anschlaghülse weist an seiner in Fig. 12 unteren Stirnende eine Abstützfläche 122 auf, die am Bauteil bzw. Blechteil abgestützt wird. Das Anschlagteil 120 weist aber auch eine Anschlagfläche 124 auf, die hier als Ringschulter ausgebildet ist und mit einer Ringschulter 126 des Stößels 50 zusammenarbeitet, die radial über die Außenseite der Masse 54 hinausragt.

Man merkt bei der Ausführungsform gemäß Fig. 12, daß das Funktionselement 12 in eine im Stößelvorsprung 58 eingearbeitete Gewindebohrung 128 eingeschraubt ist, und zwar so, daß die Niethülse 14 zwischen der unteren Stirnseite 55 der Masse 54 und dem oberen Bereich der Hohlkehle 22 des Funktionselements 12 gefangen gehalten ist. Dabei drückt die Niethülse die Masse 54 nach oben in Anlage an die Ringschulter 64 des Stößels 50, die in diesem Beispiel - wie bereits zum Ausdruck gebracht wurde - radial erweitert wird, um die Ringschulter 126 auszubilden.

Fig. 12 zeigt die Ausgangsposition vor Betätigung des Schlagwerkes.

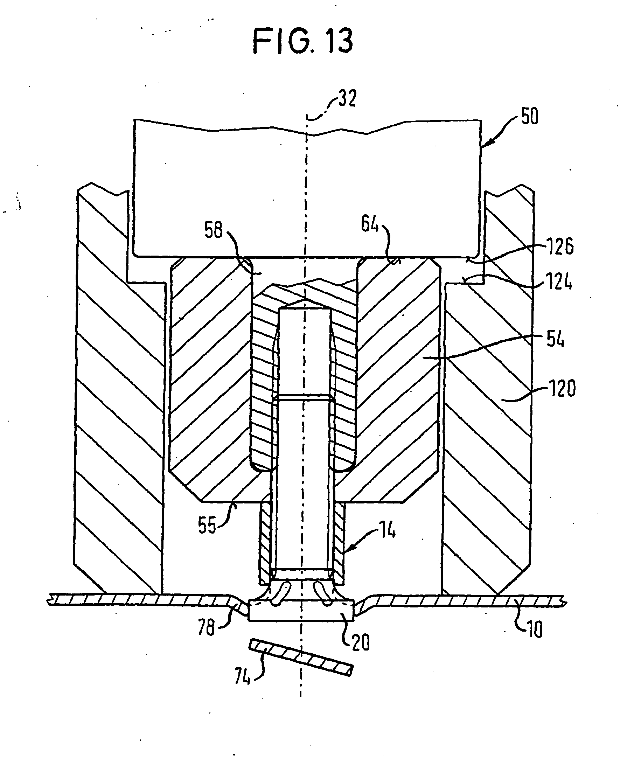

Bei Betätigung des Schlagwerkes bewegt sich der Stößel 50 schlagartig nach unten und drückt dabei die in Fig. 13 untere Stirnseite des Kopfteils 20 des Funktionselements durch das Blechteil 10 hindurch. Hierdurch wird wie bisher ein Stanzbutzen 74 erzeugt. Das Blechteil wird ebenfalls zu einem konusförmigen Kragen 78 verformt. Man kann sich das Durchstanzen des Blechteils 10 hier so vorstellen, also ob ein Geschoß - das Funktionselement 12 - mit einem Gewehr durch ein Blechteil hindurch geschossen wird. Es gibt an der Stelle des Durchschusses ein Loch, und das Blechteil wird um das Loch herum leicht konusförmig eingedellt.

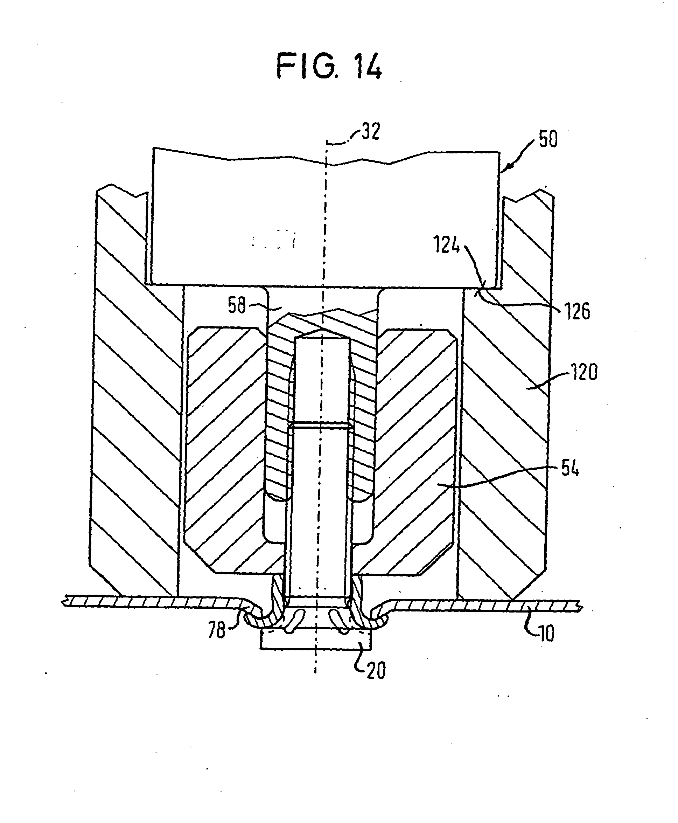

Nach dem Durchstanzen des Blechteils bewegt sich der Stößel 50 weiter, bis - wie in Fig. 14 gezeigt - die Ringschulter 126 sich in Anlage mit der Anlagefläche 124 des Anschlagteils 121 befindet. Da das Funktionselement aufgrund des formschlüssigen Eingriffes in die Gewindebohrung des Stößelvorsprunges 58 gefangengehalten ist, kann er sich nicht weiter nach unten bewegen, als die Position, die in Fig. 14 gezeigt ist. Das heißt mit anderen Worten, der Stößel 50 mit dem Funktionselement 12 wird abrupt angehalten. Die Masse 55 bewegt, sich jedoch weiter und ist so bemessen, daß die der Masse 54 zugeordnete kinetische Energie ausreicht, um die Niethülse vollständig zu verformen. Diese Verformung der Niethülse erfolgt im Prinzip analog zur Verformung der Niethülse bei der Ausführungsform gemäß Fig. 6 bis 11 und wird daher nicht gesondert beschrieben.

Der einzige Unterschied zur Ausführungsform gemäß Fig. 6 bis 11 liegt darin, daß die Verformung des unteren Endes der Niethülse 14 vollständig durch die von der Hohlkehle 22 gebildeten Gleitfläche verursacht wird. Eine Matrize zur Unterstützung dieser Umformung ist nicht vorhanden. Dennoch reicht die Hohlkehle aus, um - wie in Fig. 14 gezeigt - das untere Ende der Niethülse in ausreichendem Maß radial nach außen umzulenken, um diese in Anlage mit dem Ringkragen zu bringen.

Wie bisher beschrieben, sorgt die Masse 54 dann dafür, daß das in Fig. 14 obere Ende der Niethülse zu einem Ringflansch umgeformt wird. Diese füllt im wesentlichen den Raum innerhalb des Ringkragens aus, wobei das Material der Niethülse auch in die Ringnut 28 des Funktionselements hineingedrückt wird. Auch hier könnte die Matrize so ausgelegt werden, daß das obere Ende der Niethülse radial in das Gewinde des Funktionselements hineingedrückt wird.

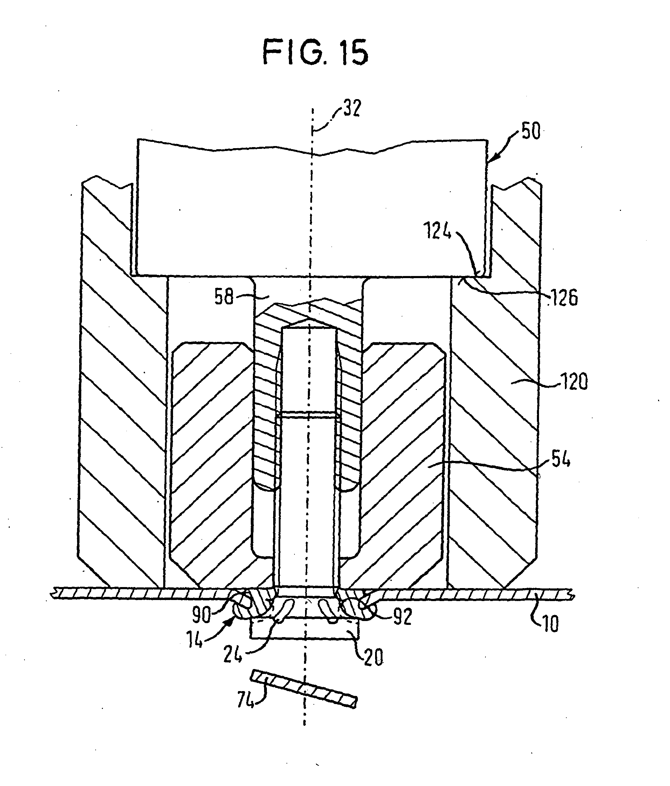

Die fertiggestellte Verbindung zwischen der Funktionsträgeranordnung und dem Blechteil gestaltet sich - wie aus Fig. 15 ersichtlich - im Prinzip identisch zu der Verbindung gemäß Fig. 10, weshalb diese Verbindung nicht näher beschrieben wird. Es ist nunmehr erforderlich, durch Drehung des Stößels 50 bzw. des Bauteils 10, das Funktionselement aus dem Stößelvorsprung 58 des Stößels 50 herauszudrehen, woraufhin das Gerät bestehend aus dem Schlagwerk mit Stößel 50, Anschlagteil 120 und Masse 54 vom Zusammenbauteil abgezogen werden kann. Das Gerät kann dann zum Einsetzen eines weiteren Funktionselements verwendet werden.

Nicht gezeigt in den Figuren dieser Ausführungsform sind Anschläge, die verhindern, daß das Anschlagteil 120 vom Stößel verlorengeht. Außerdem sind entsprechende, ineinander greifende Merkmale an der Masse 54 und am Stößel 50 bzw. am Stößelvorsprung 58 vorgesehen, die verhindern, daß die Masse vom Stößelvorsprung verlorengeht. Entsprechende Merkmale sind auch bei der Ausführungsform gemäß Fig. 6 bis 11 vorgesehen.

Die Teile sollen aber leicht auswechselbar sein, damit man ein Schlagwerk für verschiedene Funktionsträgeranordnungen benutzen kann, d.h. solche mit unterschiedlichem Durchmesser und Länge des Schaffteils. Die ineinander greifenden Merkmale, die das Verlorengehen der einzelnen Teile verhindern, jedoch eine relative axiale Bewegung zulassen, können beispielsweise nach Art einer Bajonettverbindung realisiert werden. Es können Schraubenfedern vorgesehen werden, die die Teile vorspannen und ein unbeabsichtigtes Lösen der Teile verhindern.

Dies umfaßt auch die Anwendung mit Mutterelementen mit entsprechenden Niethülsen, die wie hier beschrieben, ebenfalls als einfache Rohrabschnitte ausgebildet sein können. Kommen Mutterelemente zur Anwendung, so können diese auf ein männliches Gewinde am Stößelvorsprung 58 aufgeschraubt werden.

Die Erfindung kann aber auch mit Funktionselementen verwendet werden, die kein Gewindeteil aufweisen, beispielsweise solche, die als Führungszapfen oder Schnappbefestiger gedacht sind.

## Patentansprüche

1. Funktionsträgeranordnung bestehend aus einem Funktionselement (12) mit Schaft- und Kopfteil (18,20) sowie einer Niethülse (14), wobei die Niethülse (14) in axialer Richtung des Schaftteils (18) an diesem entlangbewegbar ist und das Funktionselement im Übergangsbereich zwischen dem Schaftteil (18) und dem Kopfteil (20) eine eine Gleitfläche zur Verformung des einen Endes der Niethülse (14) bildende Hohlkehle (22) aufweist, wobei die Hohlkehle (22) wahlweise mit sich in Längsrichtung erstreckenden Nuten (24) und/oder Vorsprüngen versehen sein kann, wobei die Niethülse die Form eines zylindrischen Rohrabschnittes aufweist.

2. Funktionsträgeranordnung nach Anspruch 1,
**dadurch gekennzeichnet,**
**daß** die Niethülse (14) die Form eines kreiszylindrischen Rohrabschnittes aufweist.

3. Funktionsträgeranordnung nach Anspruch 1,
**dadurch gekennzeichnet,**
**daß** die Niethülse (14) im Querschnitt die Form eines Rohrabschnittes mit einem polygonalen Außenumriß aufweist.

4. Funktionsträgeranordnung nach Anspruch 1,
**dadurch gekennzeichnet,**
**daß** die Niethülse (14) im Querschnitt die Form eines Rohrabschnittes mit einem genuteten Außenumriß aufweist.

5. Werkzeug zum Einsetzen einer Funktionsträgeranordnung in ein Bauteil (10), insbesondere in ein plattenförmiges Bauteil, beispielsweise in ein Blechteil, wobei die Funktionsträgeranordnung aus einem Funktionselement (12) mit Schaft- und Kopfteil (18,20) sowie einer Niethülse (14) be-steht, die Niethülse (14) in axialer Richtung des Schaftteils (18) an diesem entlang bewegbar ist und das Funktionselement (12) im Übergangsbereich zwischen dem Schaftteil (18) und dem Kopfteil (20) eine eine Gleitfläche zur Verformung des einen Endes der Niethülse bildende Hohlkehle (22) aufweist, und die Hohlkehle (22) wahlweise mit sich in Längsrichtung erstreckenden Nuten (24) und/oder Vorsprüngen versehen sein kann, insbesondere nach einem der vorhergehenden Ansprüche, wobei das Werkzeug einen Stößel aufweist, das an einem dem Kopfteil abgewandten Stirnende des Funktionselements im Betrieb anliegt bzw. angreift, wobei das Werkzeug eine am Stößel beweglich geführte Masse aufweist, die an seinem einen Stirnende zur treibenden Anlage mit einer dem Kopfteil des Funktionselements abgewandten Stirnende der Niethülse ausgelegt ist und an seinem entgegengesetzten Stirnende vom Stößel, beispielsweise von einer Ringschulter des Stößels, antreibbar ist.

6. Werkzeug nach Anspruch 5 in Kombination mit einer Matrize (40), wobei die Matrize (40) ausgelegt ist, um das Bauteil (10) auf einer Seite abzustützen und das Werkzeug auf der anderen Seite des Bauteils (10) anzuordnen ist,
**dadurch gekennzeichnet,**
**daß** die Matrize (40) eine kreisförmige Vertiefung (46) aufweist mit einem Außendurchmesser größer als der Außendurchmesser des Kopfteils (20) des Funktionselements.

7. Werkzeug nach Anspruch 6,
**dadurch gekennzeichnet,**
**daß** die kreisförmige Vertiefung (46) der Matrize (40) über eine gerundete Ziehkante (48) in die das Bauteil abstützende Stirnseite der Matrize (40) übergeht.

8. Werkzeug nach Anspruch 6 oder 7,
**dadurch gekennzeichnet,**
**daß** die Matrize (40) einen Butzenkanal (52) zur Entsorgung eines vom Kopf teil (40) des Funktionselements (12) aus dem Bauteil herausgestanzten Stanzbutzens (74) aufweist.

9. Werkzeug nach Anspruch 8,
**dadurch gekennzeichnet,**
**daß** der Butzenkanal (52) mit einem Luftanschluß (68) versehen ist, der zum Ausblasen des sich im Butzenkanal (52) befindlichen Stanzbutzens (74) ausgelegt ist.

10. Werkzeug nach Anspruch 5,
**dadurch gekennzeichnet,**
**daß** die Masse (54) so dimensioniert bzw. gewichtsmäßig ausgelegt ist, daß bei Anwendung des Werkzeuges mit der Matrize (40) in einer Presse die kinetische Energie, die beim Schließen der Presse übertragen wird, ausreicht, um mit einem durch das Schließen der Presse verursachten Schlag die Niethülse (14) vollständig umzuformen.

11. Werkzeug nach Anspruch 6,
**dadurch gekennzeichnet,**
**daß** die Matrize (40) von einem Arm eines zangenartigen Gestells (100) getragen ist, während das Werkzeug von einem zweiten Arm des zangenartigen Gestells getragen ist, und der Stößel (50) an einem Schlagwerk, beispielsweise ein mit einer Sprengladung betriebenes Bolzenschußgerät (110), vorgesehen ist, das zur Ausübung eines Schlages auf den Stößel ausgelegt ist, wobei die Masse so bemessen und ausgelegt ist, daß die Niethülse (14) in einem Schlag vollständig verformt wird.

12. Werkzeug nach Anspruch 11,
**dadurch gekennzeichnet,**
**daß** die Matrize (14) Teil einer größeren Masse ist, die ein Gewicht aufweist, das sicherstellt, daß die vom Schlagwerk freigesetzte kinetische Energie weitestgehend zur Durchführung der Stanz- und/oder Umformarbeit verbraucht ist.

13. Werkzeug nach Anspruch 5,
**dadurch gekennzeichnet,**
**daß** sich der Stößel (50) innerhalb eines Anschlagteils (120), beispielsweise in Form einer Anschlaghülse, befindet, daß der Stößel (50) über die Masse (54) in radialer Richtung hinausragt und hierdurch eine Anschlagfläche (126) bzw. -schulter bildet, welche an einer Anschlagfläche (124) des Anschlagteils (120) zur Anlage kommt, wobei der Abstand zwischen der Anschlagfläche des Anschlagteils und dessen freiem, das Bauteil (10) berührende Stirnende so bemessen ist, daß mit dem vorgesehenen Eingriff zwischen dem Stößel (50) und dem Schaftteil (18) des Funktionselements (12) das Kopfteil (90) des Funktionselements (12) die gewünschte Position auf der dem Werkzeug abgewandten Seite des Bauteils (10) aufweist.

14. Werkzeug nach Anspruch 13,
**dadurch gekennzeichnet,**
**daß** das Schaftteil (18) des Funktionselements (12) mit einem Gewinde (16) versehen ist und zumindest teilweise in eine Gewindebohrung (128) des Stößels (50) einschraubbar ist.

15. Werkzeug nach Anspruch 14,
**dadurch gekennzeichnet,**
**daß** die Einschraubtiefe des Schaftteils (18) im Stößel (50) durch die Anlage der Niethülse (14) an ihrem einen Ende an einer Stirnseite der Masse und an ihrem anderen Stirnende am Kopfteil des Funktionselements bestimmt ist.

16. Werkzeug nach einem der Ansprüche 5 bis 15,
**dadurch gekennzeichnet,**
**daß** der Stößel (50) von einem Schlagwerk antreibbar ist.

17. Werkzeug nach Anspruch 16,
**dadurch gekennzeichnet,**
**daß** der Stößel (50) einen Teil des Schlagwerks bildet.

18. Werkzeug nach Anspruch 16 oder 17,
**dadurch gekennzeichnet,**
**daß** das Schlagwerk als Bolzenschußgerät (110) realisiert ist.

19. Werkzeug nach einem der Ansprüche 5 bis 18,
**dadurch gekennzeichnet,**
**daß** die Masse 54 so bemessen bzw. gewichtsmäßig ausgelegt ist, daß die vom Stößel an die Masse übertragene, vom Schlagwerk erzeugte kinetische Energie ausreicht, um mit einem Schlag die Niethülse (14) vollständig zu verformen.

20. Werkzeug nach einem der Ansprüche 5 bis 19,
**dadurch gekennzeichnet,**
**daß** die an den Stößel vom Schlagwerk übertragene kinetische Energie ausreicht, um das Bauteil (10) mit dem Kopfteil (20) des Funktionselements (12) zu durchstanzen und über die Masse die Niethülse (14) vollständig zu verformen.

21. Verfahren zum Einsetzen einer Funktionsträgeranordnung beste-hend aus einem Funktionselement (12) mit Schaft- und Kopfteil (18,20), sowie einer Niethülse (14) in ein Bauteil, insbesondere in ein plattenförmiges Bauteil, beispielsweise in ein Blechteil, unter Anwendung des Werkzeuges nach einem der Ansprüche 5 bis 12, wobei
eine Matrize auf der einen Seite des Blechteils angeordnet wird, das Werkzeug mit dem Stößel (50) in Anlage an oder im Eingriff mit dem Schaftteil (18) des Funktionselements (12) und mit der Niethülse (14) zwischen einer am Stößel verschiebbar geführten Masse (54) und dem Kopfteil (20) des Funktionselements (12) angeordnet in Anlage mit dem Bauteil (10) auf dessen anderen Seite gebracht wird, und mit einem Schlag, der durch das Schließen einer Presse oder durch ein Schlagwerk, beispielsweise Bolzenschußgerät (110), erzeugt wird, die bzw. das eine treibende Kraft auf den Stößel (50) ausübt, das Kopfteil (20) des Elementes durch das Blechteil (10) hindurchgestossen wird, wodurch ein Stanzbutzen (74) aus dem Bauteil herausgestanzt wird und anschließend die Niethülse (14) mittels der durch den Schlag auf die Masse (54) übertragenen kinetischen Energie von der Masse vollständig umgeformt wird.

22. Verfahren nach Anspruch 21,
**dadurch gekennzeichnet,**
**daß** das Bauteil (10) im Bereich des Durchstanzloches einem konusförmigen Kragen (78) verformt wird, um den die Niethülse (14) bei deren Verformung an der durch die Hohlkehle (22) defninierten Gleitfläche umgelegt wird.

23. Verfahren zum Einsetzen einer Funktionsträgeranordnung bestehend aus einem Funktionselement (12) mit Schaft- und Kopfteil (18,20), sowie einer Niethülse (14) in ein Bauteil (10), insbesondere in ein plattenförmiges Bauteil, beispielsweise in ein Blechteil, unter Anwendung des Werkzeuges nach einem der Ansprüche 5 und 13 bis 19, wobei
das Werkzeug mit dem Stößel (50) in Anlage an oder im Eingriff mit dem Schaftteil (18) des Funktionselements (12) und mit der Niethülse (14) in einem zwischen einer am Stößel (50) verschiebbar geführten Masse (54) und dem Kopfteil (18) des Funktionselements (12) angeordnet in Anlage auf der einen Seite des Bauteils (10) gebracht wird und mit einem Schlag, der durch ein Schlagwerk, beispielsweise Bolzenschußgerät (110) erzeugt wird, das eine treibende Kraft auf den Stößel ausübt, das Kopfteil des Elementes durch das Blechteil hindurchgestossen wird; wodurch ein Stanzbutzen aus dem Bauteil herausgestanzt wird und anschließend die Niethülse (14) mittels der durch den Schlag auf die Masse (54) übertragenen kinetischen Energie von der Masse vollständig umformt wird.

24. Verfahren nach Anspruch 23,
**dadurch gekennzeichnet,**
**daß** das Bauteil im Bereich des Durchstanzloches zu einem konusförmigen Kragen (78) verformt wird, um den die Niethülse (14) bei deren Verformung an der durch die Hohlkehle (22) defninierten Gleitfläche umgelegt wird.

25. Verfahren nach Anspruch 23 oder 24,
**dadurch gekennzeichnet,**
**daß** ein zwischen Bauteil (10) und Schlagwerk eingesetztes Anschlagteil benutzt wird, um den Stößel mit dem daran angebrachten Funktionselement (18) nach dem Durchstanzen des Blechteils in der gewünschten Position anzuhalten, während die Masse (54) sich am Stößel (50) entlang zur Verformung der Niethülse weiterbewegt.

26. Verfahren nach einem der Ansprüche 21 bis 25, bei dem das Bauteil (10) vorgelocht und/oder zur Ausbildung des konusförmigen Kragens (78) vorbereitet wird, anstatt das Durchstanzen und/oder Vorbereitung des Bauteils (10) mit dem Kopfteil (18) des Funktionselements (12) vorzunehmen.

27. Zusammenbauteil bestehend aus einem Bauteil (10) und einer Funktionsträgeranordnung nach einem der Ansprüche 1 bis 4,
**dadurch gekennzeichnet,**
**daß** das Bauteil (10) im Bereich des Funktionselements (12) einen in Richtung auf das Kopfteil des Funktionselements (12) weisenden, konusförmigen Kragen aufweist, um den das eine Ende der Niethülse (14) umgelegt ist und daß das andere Ende der Niethülse (14) auf der anderen Seite des Kragens zu einem Ringflansch (90), beispielsweise zu einem Ringfalz umgeformt ist, der den Ringkragen zumindest teilweise ausfüllt und vorzugsweise in das Gewinde (16) des Schaftteils (18) bzw. in eine Ringnut benachbart zur Gleitfläche der Hohlkehle (22) eingreift.

28. Zusammenbauteil nach Anspruch 27,
**dadurch gekennzeichnet,**
**daß** die in der Hohlkehle (22) und/oder an der Hohlkehle (22) vorhandenen Nuten (24) bzw. Vorsprünge in formschlüssigem Eingriff mit der Niethülse (14) stehen und eine entsprechend Verformung des Bauteils (10) erzeugen und der Eingriff und die Verformung eine Verdrehsicherung zwischen dem Funktionselement (12), der Niethülse (14) und dem Bauteil (10) bilden.

29. Zusammenbauteil nach einem der Ansprüche 27 oder 28,
**dadurch gekennzeichnet,**
**daß** sich ein Klebstoff zwischen dem Funktionselement (12) und der Niethülse (14) und/oder zwischen der Niethülse (14) und dem Bauteil (10) befindet.

30. Zusammenbauteil nach einem der Ansprüche 27 bis 29,
**dadurch gekennzeichnet,**
**daß** die Niethülse (14) im Querschnitt einen Außenumriß mit polygonaler oder genuteter Form aufweist und eine entsprechende Verformung des Bauteils (10) verursacht hat, die der Verdrehsicherung dient.

## Claims

1. Functional carrier arrangement comprising a functional element (12) having a shaft part and a head part (18, 20) and also a rivet sleeve (14), wherein the rivet sleeve (14) is moveable in the axial direction of the shaft part (18) along the latter and the functional element has a concave throat (22) in the transition region between the shaft part (18) and the head part (20) forming a sliding surface for the deformation of the one end of the rivet sleeve (14) wherein the concave throat (22) can optionally be provided with grooves (24) and/or projections extending in the longitudinal direction, wherein the rivet sleeve has the form of a cylindrical tube section.

2. Functional carrier arrangement in accordance with claim 1,
**characterized in that**
the rivet sleeve (14) has the shape of a circularly cylindrical tube section.

3. Functional carrier arrangement in accordance with claim 1,
**characterized in that**
the rivet sleeve (14) has in cross-section the shape of a tube section with a polygonal external outline.

4. Functional carrier arrangement in accordance with claim 1,
**characterized in that**
the rivet sleeve (14) has in cross-section the shape of a tube section with a grooved external outline.

5. Tool for the insertion of a functional carrier arrangement into a component (10) in particular into a plate-like component, for example into a sheet metal part, wherein the functional carrier arrangement consists of a functional element (12) having a shaft part and a head part (18, 20) and also a rivet sleeve (14), the rivet sleeve (14) is movable in the axial direction of the shaft part (18) along the latter and the functional element (14) has in the transition region between the shaft part (18) and the head part (20) a concave throat (22) forming a sliding surface for the deformation of the one end of the rivet sleeve and the concave throat (22) can optionally be provided with grooves (24) and/or projections extending in a longitudinal direction, in particular in accordance with one of the preceding claims, wherein the tool has a plunger which in operation contacts i.e. acts on an end of the functional element remote from the head part, wherein the tool has a mass which is moveably provided at the plunger and which is designed at its one end for driving contact with an end of the rivet sleeve remote from the head part of the functional element and can be driven at its opposite end by the plunger, for example by a ring shoulder of the plunger.

6. Tool in accordance with claim 5 in combination with a die button (40') wherein the die button (40) is designed in order to support the component (10) at one side and the tool is to be arranged on the other side of the component (10)
**characterized in that**
the die button (40) has a circular recess (46) having an outer diameter which is larger than the outer diameter of the head part (20) of the functional element.

7. Tool in accordance with claim 6,
**characterized in that**
the circular recess (46) of the die button (40) merges via a rounded drawing edge (48) into the end face of the die button (40) which supports the component.

8. Tool in accordance with claim 6 or claim 7,
**characterized in that**
the die button (40) has a slug passage (52) for the disposal of
punching slug (74) punched out from the component by the head part (40) of the functional element (12).

9. Tool in accordance with claim 8,
**characterized in that**
the slug passage (52) is provided with an air connection (68) which is designed for the blowing out of the punching slug (74) located in the slug passage (52).

10. Tool in accordance with claim 5,
**characterized in that**
the mass (54) is so dimensioned or designed weight-wise that when using the tool with the die button (40) in a press the kinetic energy which is transmitted during closing of the press is sufficient in order to fully reshape the rivet sleeve (14) with one blow caused by the closing of the press.

11. Tool in accordance with claim 6,
**characterized in that**
the die button (40) is carried by an arm of a calliper-like frame (100) whereas the tool is carried by a second arm of the calliper-like frame and the plunger (50) is provided on a percussion mechanism, for
example a bolt gun (110) operated with an explosive charge which is designed to exert a blow onto the plunger, with the mass being so dimensioned and designed that the rivet sleeve (14) is fully reshaped in one blow.

12. Tool in accordance with claim 11,
**characterized in that**
the die button (14) is part of a larger mass which has a weight which ensures that the kinetic energy liberated by the percussion mechanism is largely used for carrying out the punching work and/or the reshaping work.

13. Tool in accordance with claim 5,
**characterized in that**
the plunger (50) is located inside an abutment part (120) for example in the form of an abutment sleeve, **in that** the plunger (50) projects beyond the mass (54) in a radial direction and hereby forms an abutment surface (126) or an abutment shoulder which comes into contact with an abutment surface (124) of the abutment part (120), with the spacing between the abutment surface of the abutment part and its free end contacting the component (10) being so dimensioned that with the engagement provided between the plunger (50) and the shaft part (18) of the functional element (12) the head part (20) of the functional element (11) has the desired position at the side of the component (10) remote from the tool.

14. Tool in accordance with claim 13,
**characterized in that**
the shaft part (18) of the functional element (12) is provided with a thread (16) and can be screwed at least in part into a threaded bore (128) of the plunger (50).

15. Tool in accordance with claim 14,
**characterized in that**
the screw-in depth of the shaft part (18) in the plunger (50) is determined by the contact of the rivet sleeve (14) at its one end against an end face of the mass and at its other end at the head part of the functional element.

16. Tool in accordance with one of the claims 5 to 15,
**characterized in that**
the plunger (80) can be driven by a percussion mechanism.

17. Tool in accordance with claim 16,
**characterized in that**
the plunger (56) forms a part of the percussion mechanism.

18. Tool in accordance with claim 16 or 17,
**characterized in that**
the percussion mechanism is realized as a bolt gun (110).

19. Tool in accordance with claim 5 to 18,
**characterized in that**
the masse (54) is so dimensioned or designed weight-wise that the kinetic energy transmitted from the plunger to the mass and generated by the percussion mechanism is sufficient in order to fully reshape the rivet sleeve (14) with one blow.

20. Tool in accordance with one of the claims 5 to 19,
**characterized in that**
the kinetic energy transmitted to the plunger by the percussion mechanism is sufficient in order to punch through the component (10) with the head part (20) of the functional element (12) and to completely reshape the rivet sleeve (14) via the mass.

21. Method for the insertion of a functional carrier arrangement comprising a functional element (12) having a shaft part and a head part (18, 20) and also a rivet sleeve (14) into a component, in particular into a plate-like component, for example into a sheet metal part, using the tool in accordance with one of the claims 5 to 12, wherein a die button is arranged on one side of the sheet metal part, the tool with the plunger (50) is brought into contact or into engagement with the shaft part (18) of the functional element (12) and, with the rivet sleeve (14) arranged between a mass (54) displaceably guided on the plunger and the head part (20) of the functional element (12), is brought into contact with the component (10) at its other side and with one blow, which is produced by the closing of a press or by percussion mechanism, for example by a bolt gun (110) which exerts a driving force on the plunger (15) the head part (20) of the element, is pushed through the sheet metal part (10), whereby a punching slug (74) is punched out of the component and the rivet sleeve (14) is subsequently completely reshaped by means of the kinetic energy of the mass transferred to the mass (54) by the blow.

22. Method in accordance with claim 21,
**characterized in that**
the component (10) is reshaped in the region of the piercing hole to a conical collar (78) around which the rivet sleeve (14) is folded during its deformation at the sliding surface defined by the concave throat (22).

23. Method for the insertion of a functional carrier arrangement comprising a functional element (12) having a head part and a shaft part (18, 20) and also a rivet sleeve (14) into a component (10), in particular into a plate-like component, for example into a sheet metal part, using the tool in accordance with one of the claims 5 and 13 to 19, wherein
the tool with the plunger (50) is brought into contact with or into engagement with the shaft part (18) of the functional element (12) and, with the rivet sleeve (14) arranged in a position between a mass (34) displaceably guided on the plunger (50) and the head part (18) of the functional element (12), is brought into contact with one side of the component (10) and with one blow, which is generated by a percussion mechanism, for example a bolt gun (110) which exerts a driving force on the plunger, the head part of the element is pushed through the sheet metal part whereby a punching slug is punched out of the component and subsequently the rivet sleeve (14) is completely reshaped by means of the kinetic energy of the mass (34) transferred to the mass by the blow.

24. Method in accordance with claim 23,
**characterized in that**
the component is shaped in the region of the punching hole to a conical collar (78) around which the rivet sleeve (14) is folded during its deformation at the sliding surface defined by the concave throat (22).

25. Method in accordance with claim 23 or claim 24,
**characterized in that**
an abutment part inserted between the component (10) and the percussion mechanism is used in order to hold the plunger with the functional element (18) attached to it in a desired position after the punching through of the sheet metal part whereas the mass (54) moves further along the plunger (50) for the deformation of the rivet sleeve.

26. Method in accordance with one of the claims 21 to 25, wherein the component (10) is pre-pierced and/or is prepared for the formation of the conical collar (78) instead of effecting the punching through
and/or preparation of the component (10) with the head part (18) of the functional element (12).

27. Component assembly comprising a component (10) and a functional carrier arrangement in accordance with one of the claims 1 to 4, **characterized in that** the component (10) has in the region of the functional element (12) a conical collar pointing towards the head part of the functional element (12) and around which the one end of the rivet sleeve (14) is folded and the other end of the rivet sleeve (14) is reshaped on the other side of the collar to a ring flange (90), for example to a ring fold which at least partly fills out the ring collar and preferably engages into the thread (16) of the shaft part (18) or into a ring groove adjacent to the sliding surface of the concave throat (22).

28. Component assembly in accordance with claim 27,
**characterized in that**
the grooves (24) or projections respectively present in the concave throat (22) and/or at the concave throat (22) stand in form-fitted engagement with the rivet sleeve (14) and produce a corresponding deformation of the component (10) and the engagement and the deformation form a security against rotation between the functional element (12), the rivet sleeve (14) and the component (10).

29. Component assembly in accordance with one of the claims 27 or 28,
**characterized in that**
an adhesive is present between the functional element (12) and the rivet sleeve (14) and/or between the rivet sleeve (14) and the component (10).

30. Component assembly in accordance with one of the claims 27 to 29,
**characterized in that**
the rivet sleeve (14) has in cross-section an external outline with a polygonal or grooved shape and causes a corresponding deformation of the component (10) which serves for the security against rotation.

## Revendications

1. Agencement de support fonctionnel constitué par un élément fonctionnel (12) à partie de tige et à partie de tête (18, 20), ainsi que par une douille à riveter (14), la douille à riveter (14) étant mobile en direction axiale de la partie de tige (18) le long de celle-ci et l'élément fonctionnel présentant, dans la zone de transition entre la partie de tige (18) et la partie de tête (20), une gorge creuse (22) formant une surface de glissement pour la déformation de l'une des extrémités de la douille à riveter (14), la gorge creuse (22) pouvant être pourvue au choix de rainures (24) et/ou de saillies s'étendant en direction longitudinale, dans lequel
la douille à riveter présente la forme d'un tronçon tubulaire cylindrique.

2. Agencement de support fonctionnel selon la revendication 1,
**caractérisé en ce que**
la douille à riveter (14) présente la forme d'un tronçon tubulaire cylindrique à base circulaire.

3. Agencement de support fonctionnel selon la revendication 1,
**caractérisé en ce que**
la douille à riveter (14) présente en section la forme d'un tronçon tubulaire à contour extérieur polygonal.

4. Agencement de support fonctionnel selon la revendication 1,
**caractérisé en ce que**
la douille à riveter (14) présente en section la forme d'un tronçon tubulaire à contour extérieur rainuré.

5. Outil pour insérer un agencement de support fonctionnel dans un composant (10), en particulier dans un composant en forme de plaque, par exemple dans une pièce en tôle, l'agencement de support fonctionnel étant constitué par un élément fonctionnel (12) à partie de tige et à partie de tête (18, 20), ainsi que par une douille à riveter (14), la douille à riveter (14) étant mobile en direction axiale de la partie de tige (18) le long de celle-ci et l'élément fonctionnel (12) présentant, dans la zone de transition entre la partie de tige (18) et la partie de tête (20), une gorge creuse (22) formant une surface de glissement pour la déformation de l'une des extrémités de la douille à riveter (14), la gorge creuse (22) pouvant être pourvue au choix de rainures (24) et/ou de saillies s'étendant en direction longitudinale, en particulier selon l'une des revendications précédentes, dans lequel l'outil comprend un poinçon qui, pendant le fonctionnement, s'applique contre ou attaque une extrémité frontale de l'élément fonctionnel détournée de la partie de tête, l'outil présentant une masse guidée en déplacement sur le poinçon, qui est conçue, à l'une de ses extrémités frontales, pour l'entraînement par appui contre une extrémité frontale de la douille à riveter détournée de la partie de tête de l'élément fonctionnel et qui est susceptible d'être entraînée, à son extrémité frontale opposée, par le poinçon, par exemple par un épaulement annulaire du poinçon.

6. Outil selon la revendication 5 en combinaison avec une matrice (40), la matrice (40) étant conçue pour supporter le composant (10) sur un côté et pour agencer l'outil sur l'autre côté du composant (10),
**caractérisé en ce que**
la matrice (40) présente un renfoncement circulaire (46) d'un diamètre extérieur supérieur au diamètre extérieur de la partie de tête (20) de l'élément fonctionnel.

7. Outil selon la revendication 6,
**caractérisé en ce que**
le renfoncement circulaire (46) de la matrice (40) se transforme en le côté frontal de matrice (40) supportant le composant, via une arête emboutie arrondie (48).

8. Outil selon la revendication 6 ou 7,
**caractérisé en ce que**
la matrice (40) présente un canal à pastille (52) pour évacuer une pastille de poinçonnage (74) séparée hors du composant par la partie de tête (20) de l'élément fonctionnel (12).

9. Outil selon la revendication 8,
**caractérisé en ce que**
le canal à pastille (52) est pourvu d'un raccord d'air (68) qui est conçu pour extraire par soufflage la pastille de poinçonnage (74) située dans le canal à pastille (52).

10. Outil selon la revendication 5,
**caractérisé en ce que**
la masse (54) est dimensionnée ou conçue quant à son poids de telle sorte que lors de l'utilisation de l'outil avec la matrice (40) dans une presse, l'énergie cinétique transmise lors de la fermeture de la presse suffit pour déformer complètement la douille à riveter (14) par un coup causé par la fermeture de la presse.

11. Outil selon la revendication 6,
**caractérisé en ce que**
la matrice (40) est supportée par un bras d'un bâti (100) en forme de pince, tandis que l'outil est supporté par un second bras du bâti en forme de pince, et le poinçon (50) est prévu sur un mécanisme de percussion, par exemple un pistolet enfonce-broches (110) entraîné par une charge explosive, qui est conçu pour exercer un coup sur le poinçon, la masse étant dimensionnée et conçue de telle sorte que la douille à riveter (14) est complètement déformée avec un seul coup.

12. Outil selon la revendication 11,
**caractérisé en ce que**
la matrice (40) fait partie d'une masse plus grande qui présente un poids assurant que l'énergie cinétique dégagée par le mécanisme de percussion est très largement consommée pour exécuter le travail de poinçonnage et/ou de déformation.

13. Outil selon la revendication 5,
**caractérisé en ce que**
le poinçon (50) se trouve à l'intérieur d'une partie de butée (120) par exemple sous la forme d'une douille de butée, **en ce que** le poinçon (50) dépasse en direction radiale au-delà de la masse (54) et constitue ainsi une surface de butée (126) ou un épaulement de butée qui vient en appui contre une surface de butée (124) de la partie de butée (120), la distance entre la surface de butée de la partie de butée et son extrémité frontale libre touchant le composant (10) étant dimensionnée de telle sorte que par l'engagement prévu entre le poinçon (50) et la partie de tige (18) de l'élément fonctionnel (12), la partie de tête (20) de l'élément fonctionnel (12) présente la position désirée sur le côté du composant (10) détourné de l'outil.

14. Outil selon la revendication 13,
**caractérisé en ce que**
la partie de tige (18) de l'élément fonctionnel (12) est pourvue d'un filetage susceptible d'être vissé au moins partiellement dans un perçage taraudé (128) du poinçon (50).

15. Outil selon la revendication 14,
**caractérisé en ce que**
la profondeur de vissage de la partie de tige (18) dans le poinçon (50) est déterminée par l'appui de la douille à riveter (14) par l'une de ses extrémités contre un côté frontal de la masse, et par son autre extrémité frontale contre la partie de tête de l'élément fonctionnel.

16. Outil selon l'une des revendications 5 à 15,
**caractérisé en ce que**
le poinçon (50) est susceptible d'être entraîné par un mécanisme de percussion.

17. Outil selon la revendication 16,
**caractérisé en ce que**
le poinçon (50) constitue une partie du mécanisme de percussion.

18. Outil selon la revendication 16 ou 17,
**caractérisé en ce que**
le mécanisme de percussion est réalisé sous la forme d'un pistolet enfonce-broches (110).

19. Outil selon l'une des revendications 5 à 18,
**caractérisé en ce que**
la masse (54) est dimensionnée ou conçue quant à son poids de telle sorte que l'énergie cinétique générée par le mécanisme de percussion et transmise du poinçon à la masse suffit pour déformer complètement la douille à riveter (14) avec un seul coup.

20. Outil selon l'une des revendications 5 à 19,
**caractérisé en ce que**
l'énergie cinétique transmise du mécanisme de percussion au poinçon suffit pour poinçonner le composant (10) par la partie de tête (20) de l'élément fonctionnel (12) et pour déformer complètement la douille à riveter (14) via la masse.

21. Procédé pour mettre en place un agencement de support fonctionnel constitué par un élément fonctionnel (12) à partie de tige et à partie de tête (18, 20) ainsi que par une douille à riveter (14) dans un composant, en particulier dans un composant en forme de plaque, par exemple dans une pièce en tôle, en utilisant l'outil selon l'une des revendications 5 à 12, dans lequel
on agence une matrice sur l'un des côtés de la pièce en tôle, on amène l'outil avec le poinçon (50) en appui sur ou en engagement avec la partie de tige (18) de l'élément fonctionnel (12) et avec la douille à riveter (14) entre une masse (54), guidée en déplacement sur le poinçon, et la partie de tête (20) de l'élément fonctionnel (12), en appui avec le composant (10) sur son autre côté,
et au moyen d'un coup généré par la fermeture d'une presse ou par un mécanisme de percussion, par exemple un pistolet enfonce-broches (110), qui exerce une force d'entraînement sur le poinçon (50), on enfonce la partie de tête (20) de l'élément à travers la pièce en tôle (10), suite à quoi une pastille de poinçonnage (74) est séparée hors du composant et ensuite la douille à riveter (14) est complètement déformée par la masse au moyen de l'énergie cinétique transmise par le coup à la masse (54).

22. Procédé selon la revendication 21,
**caractérisé en ce que**
dans la zone du trou de poinçonnage, le composant (10) est déformé en un col conique (78) autour duquel vient se rabattre la douille à riveter (14) lors de sa déformation contre la surface de glissement définie par la gorge creuse (22).

23. Procédé pour mettre en place un agencement de support fonctionnel constitué par un élément fonctionnel (12) à partie de tige et à partie de tête (18, 20) ainsi que par une douille à riveter (14), dans un composant (10), en particulier dans un composant en forme de plaque, par exemple dans une pièce en tôle, en utilisant l'outil selon l'une des revendications 5 et 13 à 19, dans lequel
on amène l'outil avec le poinçon (50) en appui sur ou en engagement avec la partie de tige (18) de l'élément fonctionnel (12) et avec la douille à riveter (14) entre une masse (54), guidée en déplacement sur le poinçon (50), et la partie de tête (20) de l'élément fonctionnel (12), en appui sur l'un des côtés du composant (10),
et au moyen d'un coup généré par un mécanisme de percussion, par exemple un pistolet enfonce-broches (110), qui exerce une force d'entraînement sur le poinçon, on enfonce la partie de tête de l'élément à travers la pièce en tôle, suite à quoi une pastille de poinçonnage est séparée hors du composant et ensuite la douille à riveter (14) est complètement déformée par la masse au moyen de l'énergie cinétique transmise par le coup à la masse (54).

24. Procédé selon la revendication 23,
**caractérisé en ce que** dans la zone du trou de poinçonnage, le composant est déformé en un col conique (78) autour duquel vient se rabattre la douille à riveter (14) lors de sa déformation contre la surface de glissement définie par la gorge creuse (22).

25. Procédé selon la revendication 23 ou 24,
**caractérisé en ce que**
l'on utilise une partie de butée mise en place entre le composant (10) et le mécanisme de percussion, afin d'arrêter dans la position désirée le poinçon avec l'élément fonctionnel (12) monté sur celui-ci, après le poinçonnage de la pièce en tôle, tandis que la masse (54) continue à se déplacer le long du poinçon (50) pour la déformation de la douille à riveter.

26. Procédé selon l'une des revendications 21 à 25, dans lequel le composant (10) est préperforé et/ou préparé pour réaliser le col conique (78), au lieu de procéder au poinçonnage et/ou à la préparation du composant (10) au moyen de la partie de tête (18) de l'élément fonctionnel (12).

27. Composant d'assemblage constitué par un composant (10) et par un agencement de support fonctionnel selon l'une des revendications 1 à 4,
**caractérisé en ce que**
dans la zone de l'élément fonctionnel (12), le composant (10) comprend un col conique dirigé en direction de la partie de tête de l'élément fonctionnel (12), col autour duquel est rabattue l'une des extrémités de la douille à riveter (14), et **en ce que** sur l'autre côté du col l'autre extrémité de la douille à riveter (14) est déformée en forme de bride annulaire (90), par exemple en forme de feuillure annulaire, qui remplit au moins partiellement le col annulaire et qui s'engage de préférence dans le pas de vis (16) de la partie de tige (18) ou dans une rainure annulaire au voisinage de la surface de glissement de la gorge creuse (22).

28. Composant d'assemblage selon la revendication 27,
**caractérisé en ce que**
les rainures (24) ou les saillies présentes dans la gorge creuse (22) et/ou sur la gorge creuse (22) réalisent un engagement en coopération de formes avec la douille à riveter (14) et une déformation correspondante du composant (10), et **en ce que** l'engagement et la déformation constituent un blocage antirotation entre l'élément fonctionnel (12), la douille à riveter (14) et le composant (10).

29. Composant d'assemblage selon l'une des revendications 27 ou 28,
**caractérisé en ce que**
une colle se trouve entre l'élément fonctionnel (12) et la douille à riveter (14) et/ou entre la douille à riveter (14) et le composant (10).

30. Composant d'assemblage selon l'une des revendications 27 à 29,
**caractérisé en ce que**
la douille à riveter (14) présente en section un contour extérieur de forme polygonale ou rainurée et cause une déformation correspondante du composant (10), qui sert au blocage antirotation.
